# EUROPEAN PATENT APPLICATION

(11) **EP 4 745 992 A1**
(43) Date of publication of application: **20.05.2026**
(21) Application number: 25215698.9
(22) Date of filing: 13.11.2025
(51) Int. Cl.: G21C 17/017, G01N 1/04, G21C 19/14, G21C 19/20

(54) **SAMPLING DEVICE AND METHOD FOR CALANDRIA END FITTING OF HEAVY WATER REACTOR**

(30) Priority: 15.11.2024 KR 20240162912
(71) Applicant: Doosan Enerbility Co., Ltd., Seongsan-gu Changwon-si, Gyeongsangnam-do 51711 (KR)
(72) Inventor: Park, Kwang Soo, 02225 Seoul (KR); Kim, Chang Kyu, 51471 Changwon-si, Gyeongsangnam-do (KR); Kim, Hae Woong, 51319 Changwon-si, Gyeongsangnam-do (KR); Lim, Chung Sik, 51431 Changwon-si, Gyeongsangnam-do (KR); Pak, Dong Hun, 44617 Ulsan (KR); Lim, Tae Seob, 06912 Seoul (KR)
(74) Representative: BCKIP Part mbB

(57) **Abstract**

Disclosed is a sampling device for a calandria end fitting (10) of a heavy water reactor including: a sampling tool (100) inserted into an interior of an end fitting and configured to process the end fitting which is extended in an axial direction; a tool driver (200) configured to rotate the sampling tool; and a tool moving part (300) configured to move the sampling tool or the tool driver in which the sampling tool is installed in a perpendicular direction perpendicular to the axial direction.

## Description

The present application claims priority to Korea Patent Application No. 10-2024-0162912, filed November 15, 2024.

### FIELD

The present disclosure relates to a sampling device and a method for sampling a calandria end fitting of a heavy water reactor, more particularly, a sampling device and a method for sampling a calandria end fitting of a heavy water reactor capable of performing characteristics evaluation of a calandria which is a radioactive structure by allowing a sampling tool to be inserted into an inside of a calandria end fitting and to rotate and move perpendicularly so as to sample a specimen of a certain region thereof.

### BACKGROUND

A calandria nuclear fuel assembly , also referred to as a nuclear fuel channel, generally includes an end fitting, a pressure tube, and a nuclear reactor tube. During reactor operation, this structure is irradiated by a neutron and becomes contaminated. To evaluate the degree of contamination, two approaches are typically employed: (i) theoretical evaluation using computational codes, and (ii) specimen sampling followed by analyzing the same. Because the overall contamination state of the structure should be figured out, theoretical evaluation is generally used. Then, sampling and analyzing a certain portion of the structure may then be performed to provide input data for calibration and to verity the theoretical results.

In order to sample a nuclear fuel assembly, a sampling device must be inserted into the structure in a pipe form.

However, there is a problem in that sampling a specimen is difficult because approach into the calandria of the heavy water reactor is difficult among other radioactive structures. In particular, sampling a specimen in a narrow space while considering exposure to radiation of a worker is very difficult, and thus, a method for solving the problem is needed.

### SUMMARY

An object of the present disclosure is to provide a sampling device and a method for sampling a calandria end fitting of a heavy water reactor capable of performing characteristics evaluation of a calandria which is a radioactive structure by sampling a specimen of a certain portion through rotation and movement in a perpendicular direction by a sampling tool inserted into an inside of the calandria end fitting.

The technical problem to be achieved by the present disclosure is not limited to the above-mentioned technical problem, and other technical problems that are not mentioned will be clearly understood by ordinary-skilled persons in the art to which the present disclosure pertains from the following description.

The present disclosure aims to solve the problem by proposing a method for sampling a specimen by using a sampling tool (a hole saw or a drill) from an upper structure after inserting a sampling device into an inside of a calandria end fitting of a heavy water reactor.

One embodiment is a sampling device for a calandria end fitting of a heavy water reactor including: a sampling tool inserted into an interior of an end fitting and configured to process the end fitting which is extended in an axial direction; a tool driver configured to rotate the sampling tool; and a tool moving part configured to move the sampling tool or the tool driver in which the sampling tool is installed in a perpendicular direction perpendicular to the axial direction.

According to an embodiment, the sampling tool may be disposed to face upward.

According to an embodiment, the sampling tool may be a hole saw, and a specimen may be sampled within the interior of the sampling tool.

According to an embodiment, the sampling device for a calandria end fitting of a heavy water reactor may further include: a housing having a sealed first space in which the tool driver is disposed, and the sampling tool may be connected to the tool driver and disposed outside the first space.

According to an embodiment, the sampling device for a calandria end fitting of a heavy water reactor may further include: a fixing device configured to fix the housing in a desired axial position relative to the end fitting.

According to an embodiment, the fixing device may include: an air inflow pipe configured to introduce air into the first space of the housing; a fixing pipe in communication with the first space of the housing and protruding laterally outward; and a fixing portion disposed on an inside of the fixing pipe and configured to be in close contact with an inner wall of the end fitting while being pushed laterally outward when air is introduced into the first space through the air inflow pipe.

According to an embodiment, the air inflow pipe may be disposed on a side surface of the housing.

According to an embodiment, the fixing portion may be provided in a pair, and may be disposed on opposite side surfaces of the housing to face each other.

According to an embodiment, the tool moving part may include: an inclined block on which the tool driver is movably disposed and having a tapered upper surface; and a block moving portion configured to axially move the inclined block.

According to an embodiment, the block moving portion may be configured with a cylinder.

According to an embodiment, the block moving portion may be configured with a motor and a bevel gear.

According to an embodiment, the sampling device for a calandria end fitting of a heavy water reactor may further include: a collecting portion configured to collect dust or chips generated when the end fitting is processed by the sampling tool.

According to an embodiment, the collecting portion may be disposed on a side surface of the housing.

According to an embodiment, the housing may have a second space in which the sampling tool is disposed and open upward on an upper side of the first space, and the collecting portion may be installed in the housing such that the collecting portion is communicated with the second space.

According to an embodiment, the dust or chips collected through the collecting portion may be used for characteristics evaluation of the end fitting together with the specimen sampled on the inside of the sampling tool.

Another embodiment is a method for sampling of a calandria end fitting of a heavy water reactor including: fixing step of inserting a sampling tool into an interior of an end fitting to fix the sampling tool in a desired position in the end fitting which is extended in an axial direction; processing step of rotating the sampling tool through a tool driver and moving the sampling tool or the tool driver in which the sampling tool is installed in a perpendicular direction, perpendicular to the axial direction, through a tool moving part to process the end fitting; and sampling step of sampling a specimen of the end fitting sampled on the inside of the sampling tool.

According to an embodiment, in the fixing step, air may be introduced into a sealed first space of a housing in which the tool driver is disposed.

According to an embodiment, in the fixing step, when air is introduced into the first space, a fixing portion disposed on an inside of a fixing pipe that communicates with the first space may be pushed laterally outward to be in close contact with an inner wall of the end fitting.

According to an embodiment, in the processing step, an inclined block having a tapered upper surface may be axially moved by a block moving portion, and a axial position of the tool driver movably disposed on the inclined block may be fixed relative to the end fitting.

According to an embodiment, the method for sampling of a calandria end fitting of a heavy water reactor may further include: collecting step of collecting dust or chips generated when the end fitting is processed by the sampling tool.

According to the present disclosure, characteristics evaluation of a calandria, which is a radioactive structure, may be performed by inserting a sampling tool into the inside of the calandria end fitting and obtaining a specimen from a certain region through combined rotational and perpendicular movement of the tool. In particular, it is possible to sample the specimen easily in a narrow space of the end fitting having an inner diameter as small as 112mm, while considering radiation exposure of a worker.

As a result, the present disclosure provides a device capable of reliably sampling a specimen for actual characteristics evaluation of the calandria end fitting structure in a heavy water reactor type. Such sampling allows verification of theoretical evaluation methods and improved determination of the contamination state of the structure.

The effects of the present disclosure are not limited to the above-described effects and other effects which are not described herein may be derived by those skilled in the art from the following description of the embodiments of the present disclosure.

### BRIEF DESCRIPTION OF THE DRAWINGS

FIG. 1 is a cross-sectional view of an example of an end-fitting.
FIG. 2 is a front view illustrating a sampling device of a calandria end fitting of a heavy water reactor according to an embodiment of the present disclosure.
FIG. 3 is a cross-sectional view taken along A-A line in FIG. 2.
FIG. 4 is a front view illustrating a state of a sampling tool which is moved in a perpendicular direction through a tool moving part from a position in FIG. 2.
FIG. 5 is a front view of a sampling device of a calandria end fitting of a heavy water reactor according to another embodiment of the present disclosure.
FIG. 6 is a schematic flowchart of a method for sampling a calandria end fitting of a heavy water reactor according to an embodiment of the present disclosure.

### DETAILED DESCRIPTION

Hereinafter, a preferrable embodiment with respect to a sampling device and a method for sampling a calandria end fitting of a heavy water reactor according to the present disclosure will be described with reference to accompanying drawings.

Further, terms described below are defined in consideration of the functions of one or more exemplary embodiments, and may have different meanings according to the intention of a user or operator or the convention. Furthermore, the exemplary embodiments described below are not intended to limit the scope of the present disclosure but merely to exemplify configurational elements defined in the claims.

In order to clearly illustrate the present invention, parts not related to the description are omitted, and similar parts are denoted by like reference characters throughout the specification. Throughout the specification, when a certain portion "includes" or "comprises" a certain component, this indicates that other components are not excluded and may be further included unless otherwise noted.

In the present specification, regarding an element represented as a "unit" or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

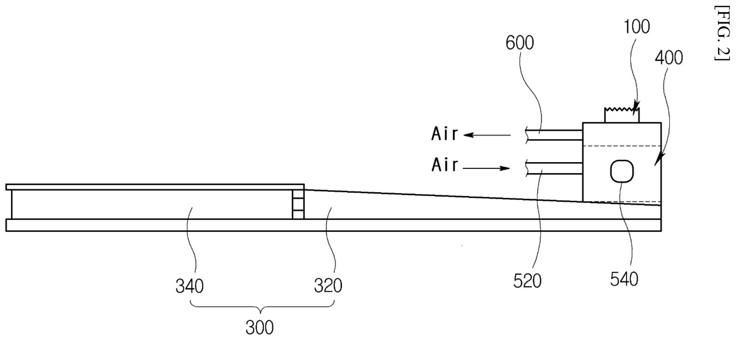

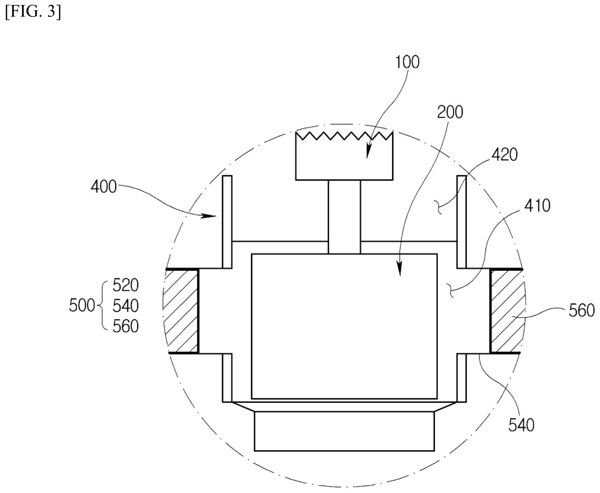

First, referring to FIGS. 2 to 4, a sampling device of a calandria end fitting of a heavy water reactor will be described.

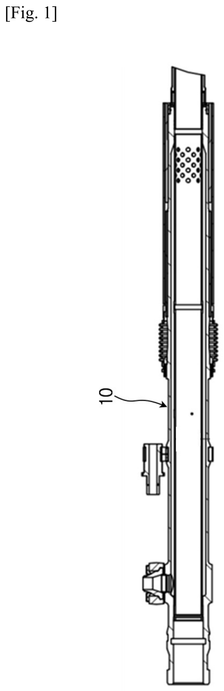

An example of the calandria end fitting 10 is illustrated in FIG. 1. The end fitting 10 has an inner diameter that varies along its length, with a minimum diameter of approximately 112mm. The sampling device is inserted into an interior of the end fitting 10, and is configured to collect specimens at any desired position along a longitudinal direction of the end fitting 10.

The sampling device may be inserted into an inside of the end fitting 10 by means of an auxiliary delivery device to minimize radiation exposure of a worker, or alternatively may be inserted into the end fitting 10 in a state in which a temporary shield is installed over an entire surface of the end fitting 10. Before inserting the sampling device, it is confirmed that a seal plug or similar component has been removed.

The sampling device of the present disclosure may include a sampling tool 100, a tool driver 200, a tool moving part 300, a housing 400, a fixing device 500, and a collecting portion 600.

The sampling tool 100 is configured to be inserted into the inside of the end fitting 10 and process the end fitting 10. At this instance, the sampling tool 100 is disposed to face upward inside the end fitting 10 and processes an inner surface of an upper part of the end fitting 10.

In a state where the sampling tool 100 is inserted into the interior of the end fitting 10 along the longitudinal direction, the sampling tool 100 may be disposed such that it faces upward inside the calandria. The direction in which the sampling tool 100 protrudes from the tool moving part 300 may be referred to as an upward direction. The longitudinal direction may be also referred to as an axial direction.

According to an embodiment, the sampling tool 100 may be implemented as a hole saw or a drill. In particular, when the sampling tool 100 is a hole saw, a specimen may be collected with the interior of the sampling tool 100. Specifically, when the hole saw operates on an inner surface of the end fitting 10, a specimen of the inner surface is cut and retained as a specimen inside the hole saw. Accordingly, after processing of the end fitting 10 by the sampling tool 100 is completed, a relatively large specimen of the end fitting 10 remains inside the sampling tool 100 and can be easily retrieved.

The tool driver 200 is configured to rotate the sampling tool 100, and is mechanically connected to the sampling tool 100. The tool driver 200 may comprise a motor or other power-operated actuator configured to drive the sampling tool 100. According to an embodiment, the tool driver 200 may be disposed within a sealed first space 410 of the housing 400. In contrast, the sampling tool 100, which is connected to the tool driver 200, is positioned outside the first space 410 and protrudes from the housing 400 so as to machine or process the end fitting 10.

The tool moving part 300 is configured to move the sampling tool 100 and/or the tool driver 200 in which the sampling tool 100 is installed in a perpendicular direction, i.e., the upward direction which is perpendicular to the longitudinal direction. That is, the tool moving part 300, which extends along the longitudinal direction, is configured to move the sampling tool 100 and/or the tool driver 200 in the upward direction, by its operation. Any component configured to move the sampling tool 100 in the perpendicular direction may be applied as the tool moving part 300.

According to an embodiment, the tool driver 200 may be movably disposed on the tool moving part 300. The tool moving part 300 may include an inclined block 320 having a tapered upper surface and a block moving portion 340 configured to move the inclined block 320 in the longitudinal direction.

The tool driver 200 may be disposed inside the sealed first space 410 of the housing 400, and the housing 400 may be disposed on the inclined block 320 in a movable manner.

According to an embodiment, the bottom of the housing 400 may be inclined to be parallel to the inclined upper surface of the inclined block 320.

According to an embodiment, the block moving portion 340 may be configured with a cylinder.

The block moving portion 340 and the inclined block 320 may be connected by a connection bar disposed between therebetween. The connection bar may be the cylinder. The connection bar may be extended or retract in response to the operation of the block moving portion 340. More specifically, one end of the connection bar is configured to be inserted into and extracted from the blocking moving portion 340 according to its operation, while the opposite end is fixedly coupled with the inclined block 340. When the connection bar extends by the operation of the block moving portion 340, the inclined block 320 moves away from the block moving portion 340.

FIG. 2 illustrates a state in which the housing 400 is positioned at the lowest point of the inclined block 320 (i.e., at the lowest region of the upper surface of the inclined block 320) before the block moving portion 340 moves the inclined block 320. In this embodiment, the upper surface of the inclined block 320 is inclined such that its height gradually decreases toward one end, that is, as the distance from the block moving portion 340 increases. The housing 400 is disposed at that lowest end of the inclined block 320.

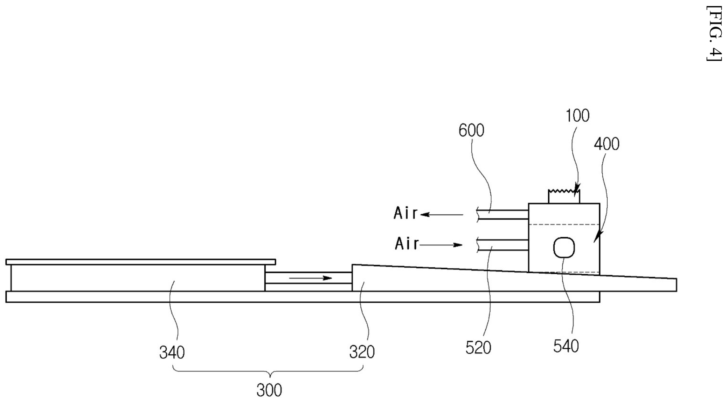

On the other hand, FIG. 4 illustrates a state in which the housing 400 is positioned at a higher position, for example, near the center of the inclined block 320, as the block moving portion 340 moves the inclined block 320 axially (i.e., in the longitudinal direction).. According to the present disclosure, while the relative position of the housing 400 relative to the inclined block 320 (that is, a position of the tool driver 200 and the sampling tool 100) changes, the position of the housing 400 relative to the end fitting 10 (and consequently, the position of the too driver 200 and the sampling tool 100) remains unchanged (i.e., fixed) by means of the fixing device 500, described below.

To this end, the housing 400 may slide on the inclined block 320. For example, a bearing or an LM guide may be provided between the housing 400 and the inclined block 320.

The fixing device 500 is configured to retain the housing 400 at a desired axial (i.e., longitudinal) position with respect to the end fitting 10.

According to an embodiment, the fixing device 500 may include an air inflow pipe 520 configured to introduce air into the first space 410 of the housing 400, a fixing pipe 540 communicated with the first space 410 of the housing 400 and protruding outward, and a fixing portion 560 disposed inside the fixing pipe 540 and configured to be pushed outward to be in close contact with an inner wall of the end fitting when air is introduced into the first space 410 through the air inflow pipe 520.

The outward direction in which the fixing pipe 540 protrudes and the fixing portion 560 is pushed may be referred to as a lateral direction. The lateral direction may be perpendicular both to the longitudinal direction and to the upward direction.

When the sampling tool 100 is positioned at a desired axial position for sampling a specimen in the end fitting 10, air is introduced into the first space 410 of the housing 400 through the air inflow pipe 520.

In this embodiment, the fixing pipe 540 and the fixing portion 560 are provided in pairs, and are arranged to face each other on opposite side surfaces of the housing 400. As the pair of fixing portions 560 come into close contact with the inner wall of the end fitting 10, a position of the housing 400 (consequently, the position of the tool driver 200 and the sampling tool 100) is securely fixed. In addition, the air inflow pipe 520 may be disposed on a side surface of the housing 400 between the pair of fixing tube 540 that face each other.

According to an embodiment, the collecting portion 600 may be configured to collect dust or chips generated while the end fitting 10 is processed by the sampling tool 100.

In this embodiment, the housing 400 further includes a second space 420, which accommodates the sampling tool 100 and is open upward above the first space 410. Dust and chips produced during machining of the end fitting 10 by the sampling tool 100 are accumulated within the second space 420. The collecting portion 600 is installed in the housing 400 in communication with the second space 420, and is configured to collect dust or chips accumulated in the second space 420. The collecting portion 600 may be disposed on a side surface of the housing 400 to be in parallel to the air inflow pipe 520. For example, a suction device or other air-intake mechanism may be connected to the collecting portion 600 to remove the dust or chips.

The dust or chips collected by the collecting portion 600 may be stored in a small container by thickness, and may be utilized for the characteristics evaluation of the end fitting 10 together with the specimen sampled from the inside of the sampling tool 100.

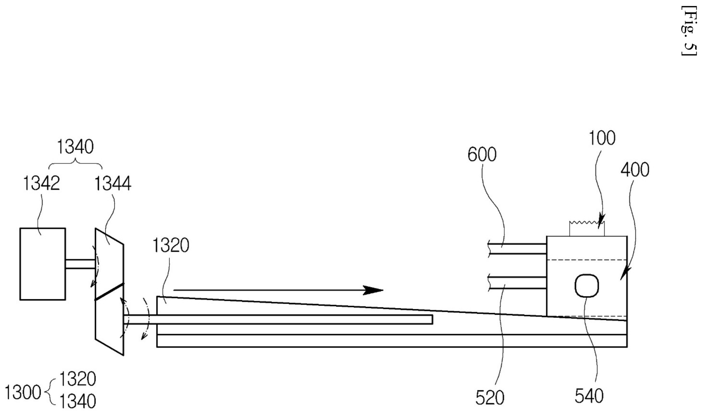

In FIG. 5, another embodiment of a tool moving part is illustrated. In this embodiment, the tool driver 200 is movably disposed on a tool moving part 1300 in a similar manner. The tool moving part 1300 includes an inclined block 1320 having a tapered upper surface and a block moving portion 1340 configured to axially move the inclined block 1320. The block moving portion 1340 may include a motor 1342 and a bevel gear 1344. When the motor 1342 is driven, the bevel gear 1344 rotates, thereby moving the inclined block 1320 in the axial direction. As the inclined block 1320 is axially moved, the housing 400 (and thus, the tool driver 200 and the sampling tool 100) moves in the perpendicular direction (i.e., upward), thereby a height thereof can be adjusted.

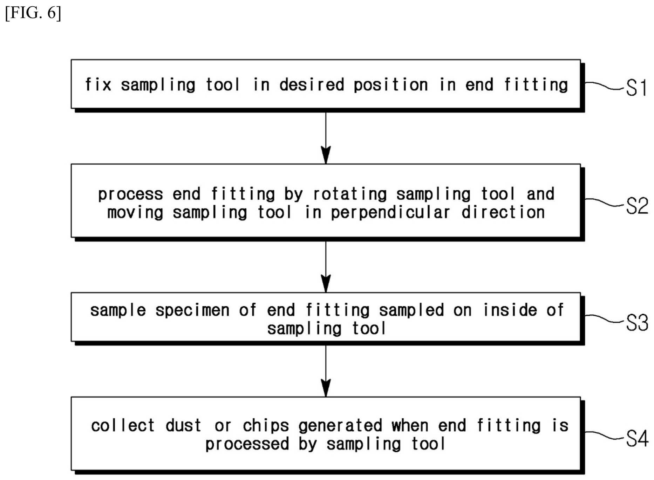

Last, referring to FIG. 6, a method for sampling the calandria end fitting of the heavy water reactor according to an embodiment of the present disclosure will be described.

The method for sampling of the present disclosure may include a fixing step (S1) of inserting the sampling tool 100 into the interior of an end fitting 10 and fixing the sampling tool 100 in a desired position in the end fitting 10; a processing step (S2) of rotating the sampling tool 100 by means of the tool driver 200 and moving the sampling tool 100 or the tool driver 200 to which the sampling tool 100 is mounted, in a perpendicular direction through the tool moving part 300 or 1300 to machine the end fitting 10; a sampling step (S3) of sampling a specimen of the end fitting 10 retained inside the sampling tool 100; and a collecting step (S4) of collecting dust or chips generated during machining of the end fitting 10 by the sampling tool 100.

In the fixing step (S1), as described above, air may be introduced into the sealed first space 410 of the housing 400 in which the tool driver 200 is disposed. When air is introduced into the first space 410, the fixing portion 560 located inside the fixing pipe 540 that communicates with the first space 410 is pushed outward to make close contact with the inner wall of the end fitting 10, thereby fixing the housing 400 in position.

In the processing step (S2), the sampling tool 100 may be oriented upward such that the sampling position remains facing upward all the time. A specimen may be sampled by rotating the sampling tool 100 and moving it in the perpendicular direction to process the end fitting 10 to a desired thickness.

In the processing step (S2), as described above, the inclined block 320 or 1320 having a tapered upper surface may be axially moved by the block moving portion 340 and 1340, while a position of the tool driver 200 movably disposed on the inclined block 320 and 1320 may remain fixed with respect to the end fitting 10.

Although the embodiments described herein focus on sampling a specimen from the end fitting 10, it will be appreciated whtat the same principle may be applied to sampling a specimen of a pressure tube or other similar structure. Such variation may be implemented, for example, by increasing the transfer distance of the delivery device.

The present disclosure is not limited to the above-described specific embodiments and descriptions, and various modifications may be made by those skilled in the art without departing from the gist of the present disclosure claimed in the claims. Such variations are within the protection scope of the present disclosure. Also, it is noted that any one feature of an embodiment of the present disclosure described in the specification may be applied to another embodiment of the present disclosure. Similarly, the present invention encompasses any embodiment that combines features of one embodiment and features of another embodiment.

### REFERENCE NUMERALS

10: end fitting
100: sampling tool
200: tool driver
300: tool moving part
320: inclined block
340: block moving portion
400: housing
410: first space
420: second space
500: fixing device
520: air inflow pipe
540: fixing pipe
560: fixing portion
600: collecting portion
1300: tool moving part
1320: inclined block
1340: block moving portion
1342: motor
1344: bevel gear

## Claims

1. A sampling device for a calandria end fitting of a heavy water reactor, comprising:
a sampling tool inserted into an interior of an end fitting and configured to process the end fitting which is extended in an axial direction;
a tool driver configured to rotate the sampling tool; and
a tool moving part configured to move the sampling tool or the tool driver in which the sampling tool is installed in a perpendicular direction perpendicular to the axial direction.

2. The sampling device for a calandria end fitting of a heavy water reactor of claim 1,
wherein the sampling tool is disposed to face upward.

3. The sampling device for a calandria end fitting of a heavy water reactor of claim 2,
wherein the sampling tool is a hole saw, and a specimen is sampled within the interior of the sampling tool.

4. The sampling device for a calandria end fitting of a heavy water reactor of claim 1, further comprising:
a housing having a sealed first space in which the tool driver is disposed,
wherein the sampling tool is connected to the tool driver and disposed outside the first space.

5. The sampling device for a calandria end fitting of a heavy water reactor of claim 4, further comprising:
a fixing device configured to fix the housing in a desired axial position relative to the end fitting.

6. The sampling device for a calandria end fitting of a heavy water reactor of claim 5,
wherein the fixing device comprises:
an air inflow pipe configured to introduce air into the first space of the housing;
a fixing pipe in communication with the first space of the housing and protruding laterally outward; and
a fixing portion disposed on an inside of the fixing pipe and configured to be in close contact with an inner wall of the end fitting while being pushed laterally outward when air is introduced into the first space through the air inflow pipe.

7. The sampling device for a calandria end fitting of a heavy water reactor of claim 6,
wherein the fixing portion is provided in a pair, and is disposed on opposite side surfaces of the housing to face each other.

8. The sampling device for a calandria end fitting of a heavy water reactor of claim 1,
wherein the tool moving part comprises:
an inclined block on which the tool driver is movably disposed and having a tapered upper surface; and
a block moving portion configured to axially move the inclined block.

9. The sampling device for a calandria end fitting of a heavy water reactor of claim 4, further comprising:
a collecting portion configured to collect dust or chips generated when the end fitting is processed by the sampling tool.

10. The sampling device for a calandria end fitting of a heavy water reactor of claim 9,
wherein the housing has a second space in which the sampling tool is disposed and open upward on an upper side of the first space, and
wherein the collecting portion is installed in the housing such that the collecting portion is communicated with the second space.

11. A method for sampling of a calandria end fitting of a heavy water reactor, comprising:
fixing step of inserting a sampling tool into an interior of an end fitting to fix the sampling tool in a desired position in the end fitting which is extended in an axial direction;
processing step of rotating the sampling tool through a tool driver and moving the sampling tool or the tool driver in which the sampling tool is installed in a perpendicular direction, perpendicular to the axial direction, through a tool moving part to process the end fitting; and
sampling step of sampling a specimen of the end fitting sampled on the inside of the sampling tool.

12. The method for sampling of a calandria end fitting of a heavy water reactor of claim 11,
wherein in the fixing step, air is introduced into a sealed first space of a housing in which the tool driver is disposed.

13. The method for sampling of a calandria end fitting of a heavy water reactor of claim 12,
wherein in the fixing step, when air is introduced into the first space, a fixing portion disposed on an inside of a fixing pipe that communicates with the first space is pushed laterally outward to be in close contact with an inner wall of the end fitting.

14. The method for sampling of a calandria end fitting of a heavy water reactor of claim 11,
wherein in the processing step, an inclined block having a tapered upper surface is axially moved by a block moving portion, and a axial position of the tool driver movably disposed on the inclined block is fixed relative to the end fitting.

15. The method for sampling of a calandria end fitting of a heavy water reactor of claim 11, further comprising:
collecting step of collecting dust or chips generated when the end fitting is processed by the sampling tool.
